# EUROPÄISCHE PATENTSCHRIFT

(11) **EP 0 347 696 B1**
(45) Veröffentlichungstag und Bekanntmachung des Hinweises auf die Patenterteilung: **25.08.1993**
(21) Anmeldenummer: 89110565.2
(22) Anmeldetag: 10.06.1989
(51) Int. Cl.: G01N 15/14, C02F 1/52

(54) **Anordnung zur Messung des Dispergiergrades in strömenden Suspersionen**
Apparatus for measuring the rate of dispersion in flowing suspensions
Installation pour mesurer le degré de dispersion dans des suspensions en écoulement

(30) Priorität: 21.06.1988 DE 3820902
(43) Veröffentlichungstag der Anmeldung: 27.12.1989
(73) Patentinhaber: BASF Aktiengesellschaft, 67063 Ludwigshafen (DE)
(72) Erfinder: Hemel, Ralf, D-6840 Lampertheim 1 (DE); Linhart, Friedrich, Dr., D-6900 Heidelberg (DE)

(56) Entgegenhaltungen:
- US-A- 3 661 460
- US-A- 3 989 381
- US-A- 4 230 558
- PATENT ABSTRACTS OF JAPAN, Band 12, Nr. 66 (P-671)[2913], 27. Februar 1988;& JP-A-62 207 933
- PATENT ABSTRACTS OF JAPAN, Band 12, Nr. 2 (P-652)[2849], 7. Januar 1988;& JP-A-62 165 141
- PATENT ABSTRACTS OF JAPAN, Band 13, Nr. 212 (P-873)[3560], 18. Mai 1989;& JP-A-01 29 734
- ENCYCLOPEDIA OF PHYSICAL SCIENCE AND TECHNOLOGY, 1987, Band 4, Seite 360
- ENCYCLOPEDIA OF INSTRUMENTATION AND CONTROL, 1971, Seite 574

## Beschreibung

Die Erfindung betrifft eine Anordnung zur kontinuierlichen Messung des Dispergiergrades in strömenden Suspensionen eines unter Druck stehenden geschlossenen Systems, bestehend aus einer mit einer laseroptischen Meßeinrichtung ausgestatteten Durchflußküvette für den Probenstrom, die als Hüllstromküvette ausgebildet ist, einer dem Eingang für den Hüllstrom vorgeschalteten Druck- und Mengenkonstanthaltung und einer dem Ausgang der Küvette nachgeschalteten Regelung der Durchflußmenge von Proben- und Hüllstrom.

Für eine schnelle in situ Messung des Dispergiergrades in strömenden Systemen ist eine laseroptische Methode sowohl zum Einsatz in Labortests für die Beurteilung der Wirkungsweise von Dispergier- bzw. Flockungshilfsmitteln als auch für die on line-Kontrolle und Regelung bzw. Steuerung von Dispergier- bzw. Flockungsanlagen geeignet, beispielsweise bei Papiermaschinen. Die laseroptische Methode beruht auf der Erfassung und Auswertung von zeitlich fluktuierenden Streulicht-, Abschaltungs- oder Reflexionssignalen von strömenden Partikeln und/oder Partikelverbänden. Eine technische Realisierung dieser Methode ist in der DE-OS 34 12 620 beschrieben. Dabei erfolgt die Messung in einer Durchflußküvette nicht an einem Teilchenensemble wie bei einer einfachen Trübungsmessung, sondern an Einzelteilchen. Dies kann entweder durch die Fokusierung des Laserlichts auf einen Strahldurchmesser im Größenbereich der zu messenden Partikel oder durch eine Vereinzelung der Partikel in einer Kapillarströmung erfolgen.

Die bekannte Apparatur ist bei unter Druck stehenden Systemen nicht ohne weiteres anwendbar. Ferner verhindert die hohe Störanfälligkeit aufgrund von Verstopfungen den Einsatz in praktischen Systemen. Systembedingte Druckschwankungen wirken sich ebenfalls nachteilig aus.

Weitere Meßeinrichtungen für die Partikelverteilung in strömenden Suspensionen sind in den Patentschriften US-A- 3 989 381 und US-A-3 661 460 vorgeschlagen. Im wesentlichen bestehen sie aus einer transparenten Durchflußküvette für einen Hüllstrom und einer diese einschließenden optischen Meßeinrichtung. Die Versorgung der Küvette erfolgt aus jeweils einem Vorratsbehälter für den Probenstrom und den Hüllstrom über Einrichtungen zur Druck- und Durchflußmengenregulierung. Der Ausgang der Küvette ist über eine Vakuumpumpe mit einem Regulator an einen Auffangbehälter angeschlossen. Eine weitere Hüllstromküvette wird in PATENT ABSTRACTS OF JAPAN, Bd. 12, Nr. 2 (P-652) [2849], 7. Jan. 1988 (JP-A-62 165 141) offenbart.

Vorliegender Erfindung liegt daher die Aufgabe zugrunde, eine Anordnung zur Messung des Dispergiergrades in strömenden Suspensionen zu entwickeln, die sowohl kontinuierlich als auch unter Druck betrieben werden kann.

Die Aufgabe wurde durch eine Meßanordnung gemäß Anspruch gelöst.

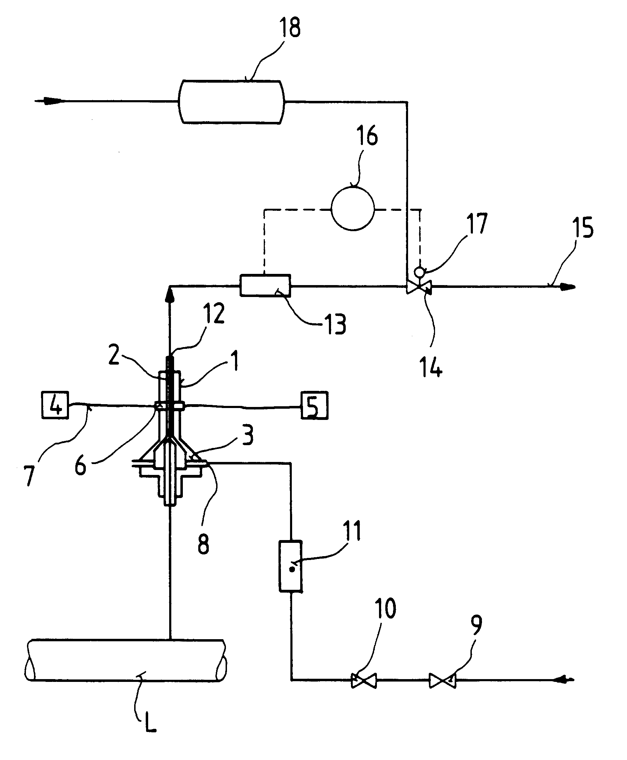

Die erfindungsgemäße Meßanordnung ist anhand eines in der Zeichnung schematisch dargestellten Ausführungsbeispiels nachfolgend beschrieben.

Zentrales Teil der Meßanordnung ist eine Durchflußküvette 1, bei der der aus einer Suspensionsleitung L entnommene Probenstrom 2 durch einen Hüllstrom 3 von einem Sender 4 und einem Empfänger 5 getrennt ist und die Senderseite aus einer einzelnen, mit einer Einrichtung 6 für einen parallelen oder fokusierten Austritt eines Laserlichtbündels eines Durchmessers im Größenbereich von strömenden Teilchen ausgestatteten Lichtleitfaser 7 besteht.

Die mit der Küvette in Verbindung stehende laseroptische Meßeinrichtung 4-7 erzeugt Streulicht-, Abschattungs- oder Reflexionssignale der strömenden Teilchen, die von einem Photodetektor über eine entsprechende Abbildungsoptik als zeitlich Spannungs-/Stromfluktuationen registriert werden, wobei durch eine sich anschließende Effektivwertmessung die Zuordnung zum Dispergiergrad des strömenden Systems erfolgt. Weitere Einzelheiten der Küvette und der Meßeinrichtung sind in der DE-OS 34 12 620 beschrieben.

Der Hüllstrom, durch den die optischen Fenster der Küvette von Ablagerungen freigehalten werden, muß konstant gehalten werden. Dies wird dadurch erreicht, daß dem Eingang 8 der Küvette 1 für das Hüllstrommedium, beispielsweise Wasser, eine Druck- und Mengenkonstanthaltung vorgeschaltet ist. Sie besteht aus der Reihenschaltung eines Druckminderventils 9, eines Druckkonstanthalteventils 10 und eines Durchflußmengenmessers 11.

Der sich aus Proben- und Hüllstrom zusammensetzende Gesamtstrom in der Küvette wird in der Menge geregelt. Hierzu ist an den Ausgang 12 der Küvette 1 ebenfalls ein Durchflußmengenmesser 13 angeschlossen, der über ein Quetschventil 14 mit einem Auslauf 15 verbunden ist. Ein PI- bzw. PID-Regler 16 wird vom Meßsignal des Mengenmessers angesteuert, dessen Signalausgang mit einem Stellglied 17 für das Ventil 14 verbunden ist. Es ist zweckmäßig, dem pneumatischen Eingang des Stellglieds einen Dämpfungsbehälter 18 vorzuschalten, damit sich wegen der kurzen Regelstrecke das System nicht in eine Eigenschwingung bringt.

## Patentansprüche

1. Anordnung zur kontinuierlichen Messung des Dispergiergrades in strömenden Suspensionen eines unter Druck stehenden geschlossenen Systems, bestehend aus einer mit einer laseroptischen Meßeinrichtung (4 - 7) ausgestatteten Durchflußküvette (1) für den Probenstrom (2), die als Hüllstromküvette ausgebildet ist, einer dem Eingang (8) für den Hüllstrom (3) vorgeschalteten Druck- und Mengenkonstanthaltung (9 - 11) und einer dem Ausgang (12) der Küvette nachgeschalteten Regelung (13, 14, 16, 17) der Durchflußmenge von Proben- und Hüllstrom, dadurch gekennzeichnet, daß die Druck- und Mengenkonstanthaltung für den Hüllstrom (3) durch die Reihenschaltung eines Druckminderventils (9), eines Druckkonstanthalteventils (10) und eines Durchflußmengenmessers (11) in der das Hüllstrommedium führenden Zuleitung gebildet ist und die Regelung des Proben- und Hüllstroms aus einem Durchflußmengenmesser (13), einem von diesem ansteuerbaren Regler (16) und einem über ein Stellglied (17) an dessen Ausgang angeschlossenen einstellbaren Ventil (14) über das der Durchflußmengenmesser (13) mit einem Auslauf (15) verbunden ist, besteht.

## Claims

1. An arrangement for continuously measuring the degree of dispersion in flowing suspensions of a pressurized closed system, comprising a flow cell (1) for the sample stream (2) which is constructed as an enveloping stream cell and is equipped with a laser-optical measuring means (4-7), a constant pressure and flow means (9-11) upstream of the inlet (8) for the enveloping stream (3), and a closed loop control system (13, 14, 16, 17) downstream of the outlet (12) from the cell for the sample and enveloping stream flow rate, wherein the constant pressure and flow means for the enveloping stream (3) is formed by the in-series connection of a pressure reducing valve (9), a constant pressure valve (10) and a flow rate meter (11) in the line feeding the enveloping stream medium and the closed loop control system for the sample and enveloping stream consists of a flow rate meter (13), a controller (16) driven thereby and an adjustable valve (14) which is connected via an adjusting member (17) to the output of the controller and via which the flow rate meter (13) is connected to an outflow (15).

## Revendications

1. Dispositif de mesure en continu du degré de dispersion dans des suspensions en écoulement d'un système fermé placé sous pression, composé d'une cuvette d'écoulement (1), équipée d'un moyen de mesure (4 à 7) de type optique à laser, pour le courant d'échantillon (2), formée d'une cuvette à courant enveloppant, de moyens de maintien constants de la pression et du débit (9 à 11), mis en circuit en amont de l'entrée du courant enveloppant (3), et d'une régulation de débit du courant d'échantillon et du courant enveloppant (13,14,16,17), mise en circuit en aval de la sortie (12) de la cuvette, caractérisé en ce que les moyens de maintien constants de la pression et du débit du courant enveloppant (3) sont formés par le montage en série dans la conduite d'amenée du fluide de courant enveloppant d'une valve de détente (9), d'une valve de maintien constante de la pression (10) et d'un débitmètre (11) et la régulaton du débit de courant d'échantillon et du courant enveloppant est composée d'un débitmètre (13), d'un régulateur (16) commandé par le débitmètre (13) et d'une valve (14) réglable, raccordée par l'intermédiaire d'un organe de réglage (17) monté à la sortie du régulateur (16) et par l'intermédiaire de laquelle le débitmètre (13) est relié à une évacuation (15).
